# EUROPEAN PATENT APPLICATION

(11) **EP 1 442 774 A1**
(43) Date of publication of application: **04.08.2004**
(21) Application number: 04001854.1
(22) Date of filing: 28.01.2004
(51) Int. Cl.: A63F 13/10

(54) **Gaming machine**

(30) Priority: 28.01.2003 JP 2003019404
(71) Applicant: Aruze Corp., Tokyo (JP)
(72) Inventor: Shinoda, Tomohiro, Koto-ku, Tokyo (JP)
(74) Representative: Prechtel, Jörg, Dipl.-Phys. Dr.

(57) **Abstract**

The gaming machine of the present invention provides a game in which a main character and a sub character dependent on the main character appear. An inviting device determines according to the capacity value of the main character and the capacity value of the sub character whether to make the sub character appear in the game or not during proceeding with the game. The inviting device also makes the sub character appear in the game according to a result of the determination. This machine arouses a desire to collect data carriers and deepens an attachment to characters, thereby multiplying fun by improving strategic elements of the game.

## Description

### BACKGROUND OF THE INVENTION

### Field of the Invention

The present invention relates to a gaming machine such as an arcade gaming machine and a home gaming machine.

### Description of the Prior Art

Conventionally, gaming machines such as arcade gaming machines and home gaming machines have provided games, e.g., role playing games and simulation games, in which various characters appear. Recently, a number of games which proceed while operating a plurality of characters have emerged. Many of these games include elaborate details. In such a game, strategies reflecting personalities and properties of characters must be set up according to the state of proceeding, so that strategic elements are rich, whereby players can become enthusiastic in the game. When each character is provided with a personality and a property, players can be emotionally involved with and attached to the character, thereby enhancing their interest in the game.

Recently provided are gaming machines which can play games by using cards, figures, and the like (hereinafter referred to as data carriers) storing data concerning characters (see, for example, Japanese Unexamined Patent Publication Nos. 2002-63092, 2002-325970, and 2002-325972). In such a gaming machine, characters which conventionally existed only in the virtual world in the game can be obtained as data carriers and grown through the game, which makes it possible to enhance the attachment to the characters and remarkably improve the interest in the game. Also, the data carriers can be exchanged and compared among the players, which can cause players to have a desire to collect cards or data carriers, whereby the interest in the game can be enhanced from a direction different from that conventionally available. In such a gaming machine, various data carriers have been prepared so that the game can be enjoyed over a long period of time while arousing a desire to collect.

In the gaming machine using the above-mentioned data carriers, however, characters are individually externalized as data carriers, so as to become independent from the other characters. Therefore, even if data carriers employed can be changed according to the state of proceeding with the game, players must determine which data carriers to use according to only personalities and properties of the individual data carriers. Hence, the correlation between characters weakens, thus reducing strategic elements. These problems may occur remarkably in a gaming machine prepared with various data carriers in particular, whereby strategic elements reflecting the relationship between characters may be lost, so that data carriers may become only subjects to be collected. In this case, after playing a game for a long time, players may become bored with growing characters and collecting data carriers, and with the game itself.

### SUMMARY OF THE INVENTION

In view of the foregoing problems, it is an object of the present invention to provide a gaming machine which is rich in amusement and can arouse a desire to collect data carriers, deepen the attachment to characters and enhance the strategic elements, thereby multiplying its fun.

In order to achieve the above-mentioned object, the present invention provides a gaming machine comprising inviting means for determining according to a capacity value of a main character and a capacity value of a sub character whether to make the sub character appear in a game or not and making the sub character appear in the game according to a result of the determination.

More specifically, the present invention provides:
a gaming machine for providing a game of a main character and a sub character dependent on the main character;
the gaming machine having a main data carrier which stores main data including a capacity value of the main character and a sub data carrier which stores sub data including a capacity value of the sub character;
the gaming machine comprising:
   main data reading means for reading the main data from the main data carrier;
   sub data reading means for reading the sub data from the sub data carrier;
   game controlling means for proceeding with the game, at least according to the main data read by the main data reading means and a control signal from a controller; and
   inviting means for determining according to the capacity value of the main character and the capacity value of the sub character read by the sub data reading means whether to make the sub character appear in the game or not during the game and making the sub character appear in the game according to a result of the determination.

Preferably, in the gaming machine, the inviting means makes the sub character appear in the game when the capacity value of the main character exceeds a specific value determined according to the capacity value of the sub character read by the sub data reading means.

Preferably, the gaming machine further comprises capacity value reducing means for reducing the capacity value of the main character when the inviting means makes the sub character appear in the game.

The main data carrier may be an action figure simulating an appearance of the main character.

The sub data carrier may be a character ball depicted with an appearance of the sub character.

Preferably, a transponder of a radio frequency identification (RFID) system is utilized as at least one of the main and sub data carriers.

Preferably, a plurality of gaming machines is arranged in parallel, wherein at least one of the gaming machines comprises:
main data reading means for reading main data from a main data carrier;
sub data reading means for reading sub data from a sub data carrier;
game controlling means for proceeding with the game, at least according to the main data read by the main data reading means and a control signal from a controller; and
inviting means for determining according to a capacity value of a main character and a capacity value of a sub character read by the sub data reading means whether to make the sub character appear in the game or not during the game and making the sub character appear in the game according to a result of the determination.

Preferably, the gaming machine further comprises a display device for displaying at least one of an image related to the game and a state of proceeding with the gaming machine.

Preferably, a representation image concerning the sub character is displayed on the display device according to emergence of the sub character in the game caused by the inviting means.

Preferably, the gaming machine further comprises a data carrier table which mounts the main and sub data carriers.

Preferably, the gaming machine further comprises a reader/writer which reads the main data stored in the main data carrier and writes the main data into the main data carrier.

Preferably, the gaming machine further comprises a reader/writer which reads the sub data stored in the sub data carrier and writes the sub data into the sub data carrier.

The capacity values of the main and sub characters may comprise at least one of physical, offensive, and magical power values.

### BRIEF DESCRIPTION OF THE DRAWINGS

Fig. 1 is a perspective view schematically showing an example of medal gaming machine in accordance with an embodiment of the present invention;
Fig. 2A is a block diagram schematically showing the internal configuration of a main unit of the medal gaming machine shown in Fig. 1, whereas Fig. 2B is a block diagram schematically showing the internal configuration of a satellite of the medal gaming machine;
Fig. 3 is a perspective view schematically showing an example of the figure in accordance with the embodiment of the present invention;
Fig. 4A is a front view schematically showing an example of the character ball in accordance with the embodiment of the present invention, whereas Fig. 4B is an exploded perspective view thereof;
Fig. 5 is a flowchart showing a subroutine concerning an animal inviting process executed in the satellite; and
Fig. 6A is a view schematically showing an example of selective image for selecting invited animals to appear in a game, Fig. 6B is a view schematically showing another example of the selective image, and Fig. 6C is a view schematically showing an example of image displayed on the display device when the invited animal appears in the game.

### DESCRIPTION OF THE PREFERRED EMBODIMENTS

Embodiments of the present invention will be explained with reference to the drawings. In the following, as a preferred embodiment of the gaming machine in accordance with the present invention, a case where the gaming machine of the present invention is employed in a medal gaming machine will be illustrated and explained. It is assumed that a figure representing an appearance of a main character (brave) is used as a main data carrier, whereas a character ball depicted with an invited animal which is a sub character is used as a sub data carrier. Further, it is assumed that each of the figure and character ball is provided with a transponder of an RFID system.

In this specification, the explanation will conform to the following rule of definition of terms and the like.

### Definition of Terms, etc.

The gaming machine in accordance with an embodiment of the present invention encompasses arcade gaming machines placed in so-called arcades, home gaming machines, and portable gaming machines, for example. The gaming machine may be configured such that a plurality of people can play a game at the same time. Also, the gaming machine may be configured so as to connect with other gaming machines via communication lines, so that various kinds of data are transmitted and received therebetween.

The medal gaming machine in the embodiment of the present invention is a gaming machine comprising a medal insertion slot for inserting a medal and a medal payout chute for paying out the medal, in which a game is played when a player or the like inserts a medal into the medal insertion slot, and the medal is paid out according to an input operation of the player or the like. A medal may be inserted into the medal gaming machine during the proceeding with the game. The medal gaming machine is usually placed in an arcade and is included in the arcade gaming machines.

Coins and tokens may be used instead of the medal.

The medal gaming machine may be one in which one person can play a game, or one in which a plurality of players can play a game at the same time. The medal gaming machine is equipped with satellites whose number corresponds to the number of players who can play a game at the same time in the medal gaming machine.

In the embodiment of the present invention, the main character refers to one who becomes a leading character among characters appearing in the game. Usually, the main character is directly related to operations of the controller by a player in the proceeding with the game. The main character may be either a real or imaginary person, an animal, or the like.

The sub character is a character dependent on the main character. As with the main character, the sub character may be either a real or imaginary person, an animal, or the like.

In the following, the main and sub characters may also be collectively referred to as character.

In the embodiment of the present invention, the main data carrier is used in the game by the gaming machine and refers to one comprising a storage part which can store the main data including the capacity values of the main character. The sub data carrier is used in the game by the gaming machine and refers to one comprising a storage part which can store the sub data including the capacity values of the sub character.

The number of main data carriers usable in the gaming machine in accordance with the embodiment of the present invention when a player plays a game is not limited in particular as long as it is 1 or greater.

The number of sub data carriers may be either zero or at least 1.

In the following, the main and sub data carriers may also be collectively referred to as data carrier.

The storage part in the embodiment of the present invention is not limited in particular as long as it can store data including a capacity value of a character. For example, cards provided with a magnetic stripe, IC chips, and IC cards can be used. When an IC chip or IC card is used in the gaming machine, the IC chip or IC card may be either of contact or noncontact type. An example of the noncontact IC chip or noncontact IC card is a transponder used in an RFID (Radio Frequency IDentification) system. This is a conventionally known technique, which is disclosed in Japanese Unexamined Patent Publication No. HEI 8-21875, and thus will not be explained here.

In the following, storing of data into the storage part of a data carrier will also be referred to as storing of data into the data carrier.

The color and form of the data carrier are not limited in particular. For example, the data carrier may be a figure representing a character, or a card formed with a pattern depicting the appearance of the character or the like. It may also be a ball made of a resin or the like on which the appearance of a character or the like is depicted (also referred to as character ball hereinafter). Each of the above-mentioned figure, card, and character ball is one from which the player can identify the character individually, thereby enhancing the attachment to the character.

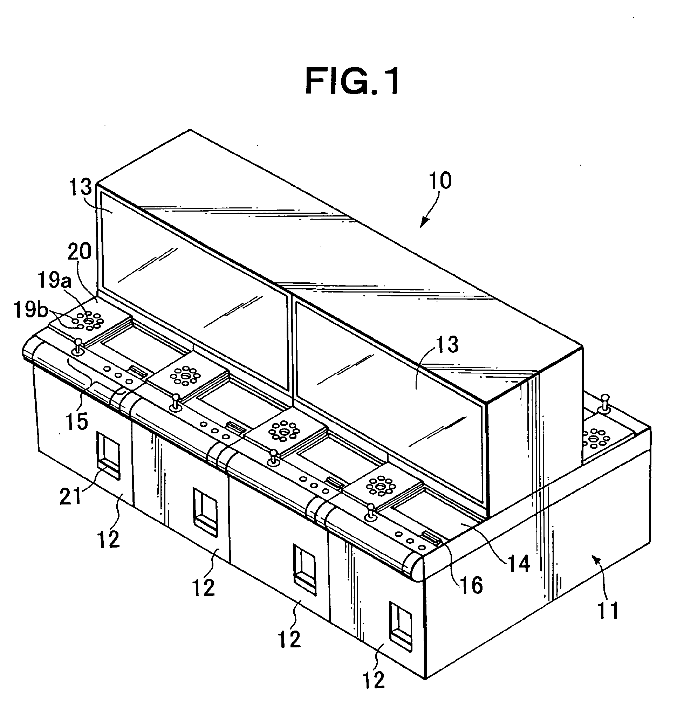

Fig. 1 is a perspective view schematically showing an example of the medal gaming machine in accordance with the embodiment of the present invention.

As shown in Fig. 1, the medal gaming machine 10 comprises a main unit 11 composed of eight satellites 12 in total constituted by four arranged on the front side and four arranged on the rear side, whereby at most eight players can play a game simultaneously. Large display devices 13 are vertically disposed between the group of four satellites 12 on the front side and the group of four satellites 12 on the rear side, and display images according to the state of proceeding with the game.

Each satellite 12 has an upper face provided with a display device 14 for displaying images related to the game, a controller 15 to be operated by a player, a medal insertion slot 16 for inserting medals required for playing the game, and a data carrier table 20 for mounting a figure 30 and a character ball 40 which will be explained later.

The data carrier table 20 is formed with a center recess 19a and eight recesses 19b. The eight recesses 19b surrounds the recess 19a. The figure 30 and character ball 40, which will be explained later, are mounted on the data carrier table 20 such that a pedestal 32 of the figure 30 is inserted to the center recess 19a whereas a part of the character ball 40 is fitted into the recess 19b.

The front face of the satellite 12 is provided with a payout chute 21.

In the medal gaming machine 10 in accordance with the embodiment of the present invention, either a medal or a character ball 40 which will be explained later may be let out from the payout chute 21. Whether the medal or character ball 40 is paid out according to the result of the game may be determined by a lottery or made selectable by the player.

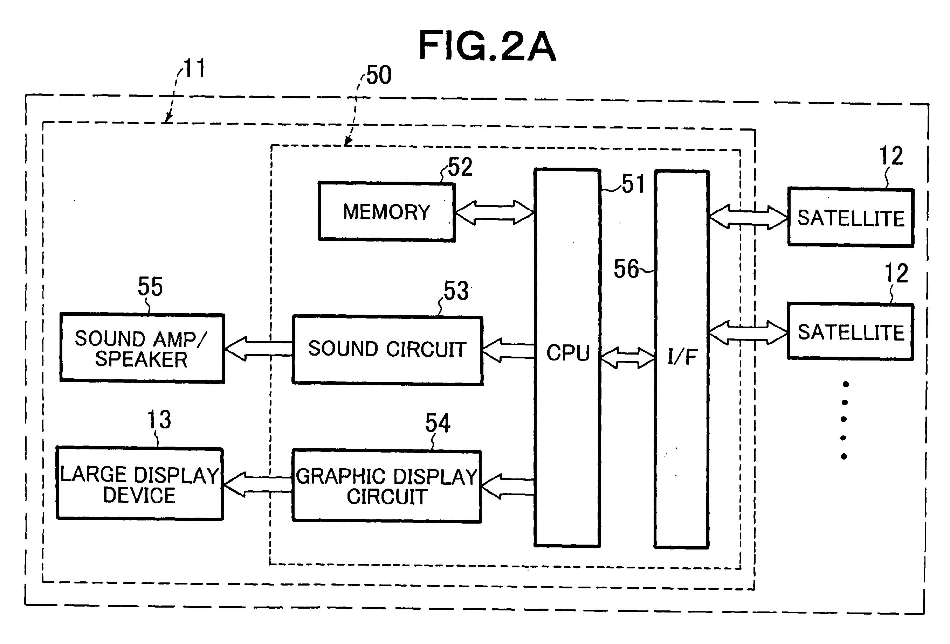

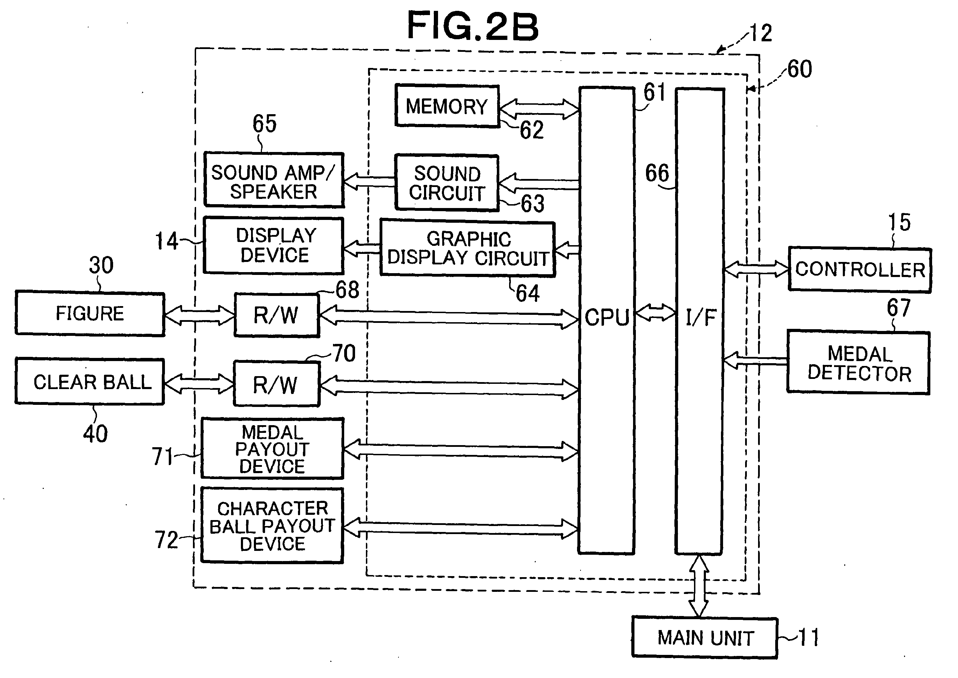

Fig. 2A is a block diagram schematically showing the internal configuration of the main unit 11 of the medal gaming machine 10, whereas Fig. 2B is a block diagram schematically showing the internal configuration of the satellite 12 of the medal gaming machine 10.

As shown in Fig. 2A, a main controller 50 is provided within the main unit 11 of the medal gaming machine 10. The main controller 50 comprises a central processing unit (CPU) 51, a memory (RAM) 52, a sound circuit 53, and a graphic display circuit 54. By way of an interface circuit (I/F) 56, the CPU 51 is connected to the eight satellites 12. According to input signals supplied from the satellites 12 by way of the I/F 56 as well as data and programs stored in the RAM 52, the CPU 51 carries out various kinds of processing. Based on results of the processing, the CPU 51 transmits an instruction signal to each satellite 12, so as to regulate the satellite 12 in an initiative fashion, thereby proceeding with the game. Here, the main controller 50 functions as game controlling device (also referred to as game controlling means).

The memory 52 stores various kinds of image data to be displayed on the large display devices 13, control programs, and the like. The sound circuit 53 is connected to a sound amplifier 55 for outputting sounds corresponding to various images displayed on the large display devices 13. The graphic display circuit 54 causes the large display devices 13 to display an image selected by a control signal from the CPU 51.

As shown in Fig. 2B, a controller 60 is provided within each satellite 12. The controller 60 comprises a CPU 61, a memory 62, a sound circuit 63, and a graphic display circuit 64. By way of an I/F 66, the CPU 61 is connected to the main unit 11 and the controller 15. By way of the I/F 66, the CPU 61 can receive various kinds of data and programs from the main unit 11, and instruction signals supplied when the player operates the controller 15.

Also, a medal detector 67 is connected to the CPU 61 by way of the I/F 66. When the medal detector 67 detects a medal inserted into the medal insertion slot 16, it supplies a detection signal to the CPU 61.

The sound circuit 63 is connected to a sound amplifier 65 for outputting sounds corresponding to various images displayed on the display device 14. The graphic display circuit 64 causes the display device 14 to display an image selected by a control signal from the CPU 61.

A reader/writer (R/W) 68 is connected to the CPU 61, so as to transmit instruction signals to the figure 30 mounted on the data carrier table 20 and receive answer signals from the figure 30, thereby writing main data into the figure 30 and reading main data from the figure 30.

Also, a reader/writer (R/W) 70 is connected to the CPU 61, so as to transmit instruction signals to the character ball 40 mounted on the data carrier table 20 and receive answer signals from the character ball 40, thereby writing sub data into the character ball 40 and reading sub data from the character ball 40.

A medal payout device 71 and a character ball payout device 72 are connected to the CPU 61. According to a control signal from the CPU 61, the medal payout device 71 pays out a medal stored at a predetermined position within the satellite 12. According to a control signal from the CPU 61, the character ball payout device 72 pays out a character ball stored at a predetermined position within the satellite 12.

The figure used in the medal gaming machine 10 will now be explained.

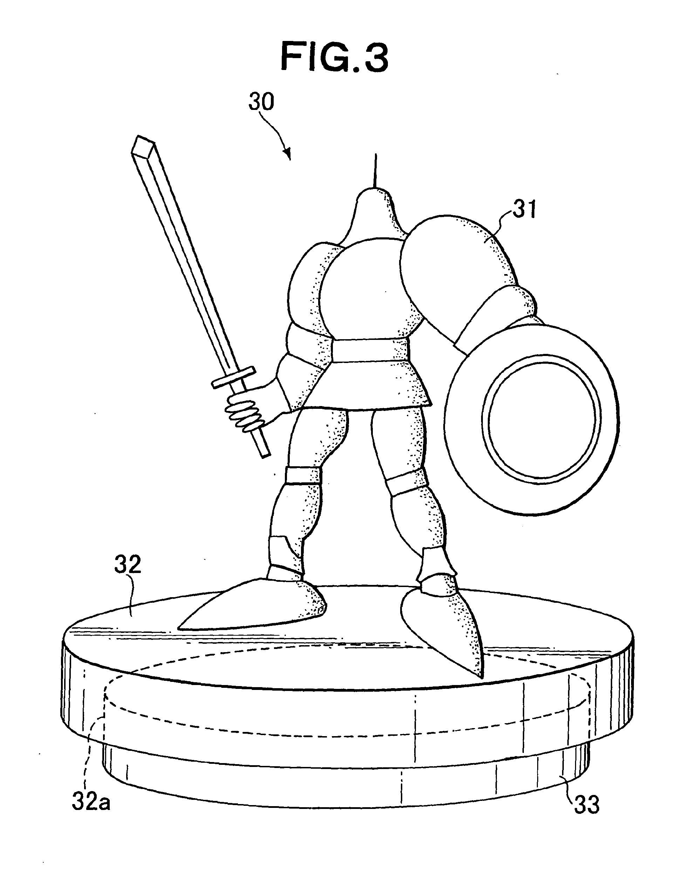

Fig. 3 is a perspective view schematically showing an example of a figure in accordance with the present invention.

As shown in Fig. 3, this figure 30 comprises a statue 31 representing a main character (brave), a substantially disk-shaped pedestal 32 disposed at the lower end of the statue 31, and a coin-shaped RFID tag 33 fitted and fixed to a recess 32a formed in the pedestal 32.

The pedestal 32 is fitted into the recess 19a formed in the data carrier table 20 of the satellite 12, whereby the figure 30 is mounted on the data carrier table 20.

The RFID tag 33 includes a single chip 35 (not depicted) buried therein, and is printed with an antenna 34 (not depicted) for transmitting and receiving radio waves. The single chip 35 comprises a transmitting/receiving circuit, a control circuit, and a memory. The single chip 35 receives from the antenna 34 an instruction signal emitted from the R/W 68, so as to generate a power, thereby rewriting main data stored in the memory; and transmits main data to the R/W 68 as answer radio waves.

The character ball used in the medal gaming machine 10 will now be explained.

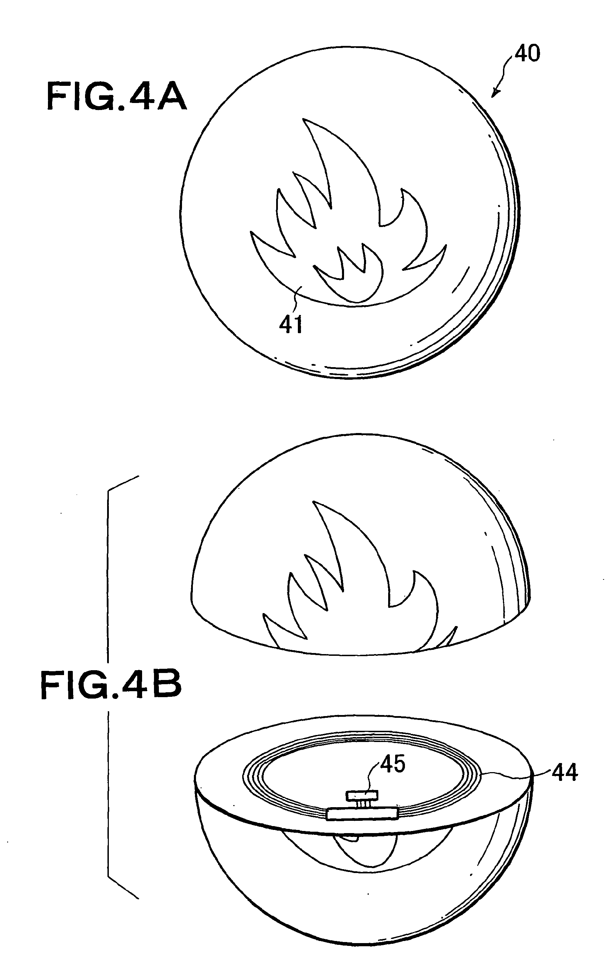

Fig. 4A is a front view schematically showing an example of the character ball in accordance with the embodiment of the present invention, whereas Fig. 4B is an exploded perspective view thereof.

As shown in Fig. 4A, the character ball 40 is spherical, and is formed with an attribute pattern 41 illustrating a flame indicative of an attribute of a sub character (invited animal). Though not depicted, the rear side of the attribute pattern is formed with a character pattern 42 illustrating an appearance of the sub character. Examples of the method of forming the character ball 40 with the attribute pattern 41 and character pattern 42 include those attaching seals or films depicted with the patterns thereto. The attribute will be explained later in detail.

As shown in Fig. 4B, the character ball 40 includes a single chip 45 buried therein, and is formed with an antenna 44 for transmitting and receiving radio waves. The single chip 45 and antenna 44 are similar to the single chip 35 and antenna 34 explained with reference to Fig. 3, and thus will not be explained here.

For example, the character ball 40 can be made by a method comprising the steps of preparing a pair of hemispherical members made of a resin; forming a recess in an upper face of one of the hemispherical members; fitting a single chip into the recess; printing the upper face with an antenna; and then bonding the hemispherical members to each other with an adhesive or the like.

A method of carrying out a game with the medal gaming machine 10, and details of the game provided by the medal gaming machine 10 will now be explained.

### (A) Procedure before Starting Game

First, a player is required to obtain a figure and a character ball before starting the game. The method of providing the player with the figure and character ball is not limited in particular. For example, they may be sold at a counter of an arcade, or issued from the gaming machine 10 in response to a predetermined number of medals inserted therein.

As mentioned above, the figure and character ball are provided with storage parts such as an RFID tag, so that capacity values and the like of the main character and invited animal operated by the player are stored. By using such figure and character ball, even when the game is resumed after being interrupted, the game can be played in a state where the main character and invited animal keep their capacity values and the like at the time of interruption.

### (B) Outline of Game

The game provided by the gaming machine 10 is one in which, when a figure which is a data carrier is mounted on the data carrier table 20 provided in the satellite 12, characters appear in a virtual world spread in the game, and a main character operated by the player cooperates with invited animals (sub characters) so as to defeat eight guardian monsters dominating the virtual world.

Since the data carrier table 20 is formed with eight recesses 19b as mentioned above, the main character can cause at most eight invited animals to appear. On the other hand, the virtual world is common among all of the eight satellites 12, whereby at most eight main characters operated by respective players appear in the virtual world.

In the satellite 12 with no player, the main character may be kept from appearing in the game, or the main character may appear in the game while the game is automatically played according to an instruction signal or the like supplied from the CPU 61.

When the game is started, main characters operated by respective players appear and are arranged at predetermined grids of an area simulating a backgammon board (also referred to as field hereinafter) displayed in the large display devices 13.

Next, each player to play the game operates the controller 15 so as to stop a roulette having a predetermined range of numbers (e.g., 1 to 8) displayed on the display device 14 of the satellite 12, for example, and move the main character among grids within the field according to thus determined number.

When the main character operated by the player stops at a grid having a specific color in the field, an event corresponding to the color of the grid occurs. For example, the main character or invited animal is attacked by a guardian monster when the main character stops at a blue grid; an animal can be invited by an inviting device (which will also be referred to as inviting means) when the main character stops at a yellow grid; and thus invited animal can attack the guardian monster when the main character stops at a red grid.

### (C) Capacity Value and Attribute

First, capacity values of the main character will be explained.

In the game provided by the medal gaming machine 10, the R/W 68 reads main data including capacity values of the main character from the figure when the game starts. Namely, the CPU 61 transmits a control signal to the R/W 68, so as to cause the R/W 68 to transmit an instruction signal to the figure mounted on the data carrier table 20 and receive an answer signal emitted from the figure. Here, the controller 60 and R/W 68 function as a main data reading device (also referred to as main data reading means) for reading main data from the figure.

Examples of the capacity values include physical, offensive, and magical power values. When main data of the main character is read by the R/W 68, values and the like indicating respective magnitudes of capacity values are displayed on the display device 14 and the like. The character can be considered stronger as these capacity values are greater.

Capacity values and attributes of the invited animal will now be explained.

When the main character stops at a grid (yellow grid) for inviting an animal in the field during the proceeding with the game, the R/W 70 reads sub data including capacity values of the invited animal from the character ball mounted on the data carrier table 20.

Capacity values of the invited animal include attributes in addition to capacity values of the main character (e.g., physical, offensive, and magical power values).

The attributes are properties inherent in individual invited animals such as flame, water, light, and darkness, for example. The attributes constitute a part of the capacity values.

The eight guardian monsters also have their own attributes.

For example, assuming that the attribute of a invited animal is flame whereas the attribute of a guardian monster is water here, the guardian monster is susceptible to attack by the invited animal whereas the invited animal is susceptible to attack by the guardian monster. Therefore, when the invited animal having an attribute of flame attacks the guardian monster having an attribute of water, damages severer than usual can be provided. When the invited animal having an attribute of flame is attacked by the guardian monster having an attribute of water, on the contrary, damages severer than usual are incurred. In the following, a relationship such as that between flame and water will be referred to as an opposite relationship. The above-mentioned light and darkness also have an opposite relationship therebetween.

When their attributes are the same, e.g., flame vs. flame, or water vs. water, damages applied upon and received from the opponent are weaker than usual upon attacking.

### (D) Inviting of Animal

An animal inviting process carried out in the medal gaming machine 10 in accordance with the present invention in order to cause an invited animal to appear when a predetermined condition (e.g., a condition that the main character stops at a yellow grid in the field) is satisfied as mentioned above will now be explained.

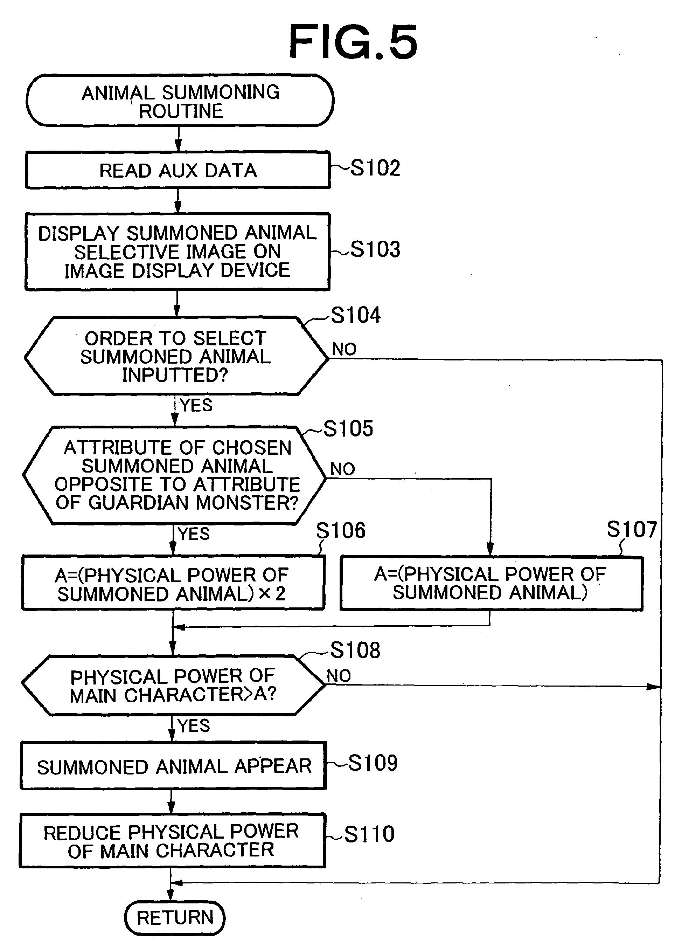

Fig. 5 is a flowchart showing a subroutine concerning the animal inviting process executed in the satellite 12 when the main character stops at a yellow grid in the field during the proceeding with the game.

First, processing for reading sub data from the character ball mounted on the data carrier table 20 is carried out (step S102). Namely, the CPU 61 transmits a control signal to the R/W 70, so as to cause the R/W 70 to transmit an instruction signal to the character ball mounted on the data carrier table 20 and receive an answer signal emitted from the character ball. The answer signal contains sub data including capacity values of an invited animal which is a sub character. As a result, the sub data is read from the character ball and stored into the memory 62. Here, the controller 60 and R/W 70 function as a sub data reading device (also referred to as sub data reading means) for reading sub data from the character ball.

Since the data carrier table 20 is formed with eight recesses 19b for mounting respective character balls, sub data can be read from at most eight character balls at the same time. When it is determined that no character ball is placed on the data carrier table 20 in the processing of step S102, an image for urging a character ball to be placed on the data carrier table 20 may be displayed on the display device 14, or the subroutine may be terminated as it is so as to proceed with the game without the invited animal appearing, for example.

Subsequently, according to the main data stored into the memory 62 after being read from the figure upon starting the game and the sub data stored into the memory 62 after being read from the character ball in step S102, the CPU 61 reads various kinds of required image data from the memory 62 and causes the display device 14 to display a selective image by way of the graphic display circuit 64 (step S103). The selective image is one for promoting a selection of which invited animal to appear among the sub data of the invited animal being read. When sub data are read from three character balls in step S101, for example, an image showing three invited animals is displayed on the display device 14 as the selective image.

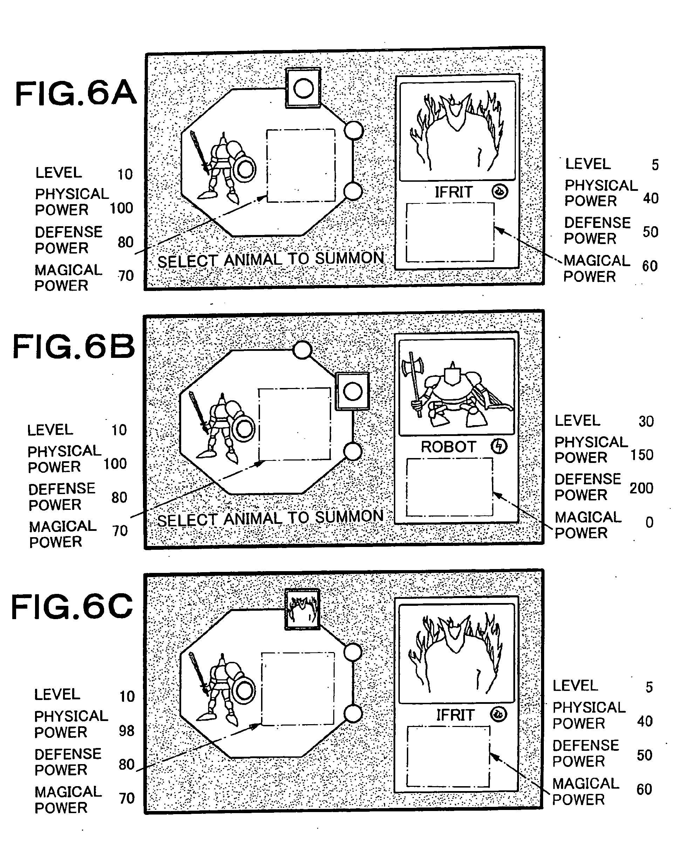

The selective image shown on the display device 14 will be explained later in detail with reference to drawings (Figs. 6A to 6C).

Then, the CPU 61 determines whether an order to select an invited animal is inputted or not (step S104). Namely, the CPU 61 determines whether an instruction signal supplied from the controller 15 when the controller 15 is operated in conformity to the operating procedure in the selective image is received or not. The instruction signal includes an instruction concerning whether invited animals should appear or not and an instruction concerning a selection of which invited animal to appear in the selective image displayed on the display device 14.

When it is determined in step S104 that no order to cause invited animals to appear is inputted, this subroutine is terminated, whereby the game proceeds with no appearance of invited animals. When it is determined in step S104 that an order to cause an invited animal to appear is inputted, on the other hand, then the CPU 61 determines whether the attribute of the chosen invited animal and the attribute of the guardian monster to battle with have an opposite relationship or not (step S105).

When it is determined in step S105 that the attribute of the chosen invited animal and the attribute of the guardian monster have an opposite relationship therebetween, the CPU 61 calculates a specific value A, which becomes a reference for determining whether the invited animal should appear or not, as A = (physical power value of invited animal) × 2 (step S106). Namely, the CPU 61 calculates the specific value A according to the physical power value of the invited animal included in the sub data stored in the memory 62, and stores thus calculated specific value A into the memory 62.

When it is determined in step S105 that the attribute of the invited animal and the attribute of the guardian monster have no opposite relationship therebetween, on the other hand, the CPU 61 calculates the specific value A as A = physical power value of invited animal (step S107).

After executing the processing of step S106 or S107, the CPU 61 determines whether the physical power value of the main character is greater than the specific value A or not (step S108). If it is not determined in step S108 that the physical power value of the main character is greater than the specific value A, the subroutine is terminated, whereby the game proceeds without the invited animal appearing. Here, an image indicative of the fact that the chosen invited animal cannot appear may be displayed on the large display device 13, the display device 14, and the like.

If it is determined in step S108 that the physical power value of the main character is greater than the specific value A, on the other hand, the CPU 61 carries out processing for making the invited animal appear (step S109). Here, a representation image showing the emergence of the invited animal or the like may be displayed on the large display device 13, for example, so as to impress the player strongly with the emergence of the invited animal.

When this subroutine is executed, the controller 60 functions as an inviting device for determining according to a capacity value of the main character and a capacity value of the sub character whether to make the sub character appear in the game or not and making the sub character appear in the game according to the result of the determination.

Subsequently, the CPU 61 carries out processing for reducing the physical power value of the main character by a predetermined number (step S110). An example of the method of reducing the physical power value of the main character is one in which the physical power value of the main character is reduced by a number corresponding to 5% of the physical power value of the invited animal having appeared.

Here, the controller 60 functions as a capacity value reducing device (also referred to as capacity value reducing means) for reducing the capacity value of the main character when the sub character appears in the game.

Fig. 6A is a view schematically showing an example of selective image displayed on the display device 14, Fig. 6B is a view schematically showing another example of the selective image, and Fig. 6C is a view schematically showing an example of image displayed on the display device 14 when the invited animal appears.

In the following, the attribute of the guardian monster during the proceeding with the game is assumed to be water.

On the left side of the screen of the display device 14, as shown in Figs. 6A to 6C, an image illustrating a main character (brave), an image indicative of capacity values and the like of the main character, and an image depicting an octagonal frame are displayed. The eight corners of the frame correspond to the respective recesses 19b of the data carrier table 20 for mounting character balls. At positions where character balls are mounted, respective images illustrating three balls simulating the character balls are displayed. By operating the controller 15, the player chooses one of the three balls, thereby determining an invited animal to appear.

In Figs. 6A and 6B, each of the chosen balls is surrounded by an image illustrating a rectangular frame, whereas an image (also referred to as character image hereinafter) indicating the appearance, capacity values, and the like of the invited animal corresponding to the character ball mounted at the position of the ball surrounded by the rectangular frame is shown on the right side of the screen. The character image includes an image indicative of the attribute of the character, which is displayed on the right side of the center of the part displaying the character image. On the right side of the center of the part displaying the character image in Fig. 6A, an image simulating a sphere depicted with flame is shown, which indicates that the attribute of the character is flame.

In Fig. 6A, the invited animal, i.e., Ifrit, has an attribute of flame, whereas the guardian monster has an attribute of water as mentioned above, whereby the attribute of the invited animal and the attribute of the guardian monster have an opposite relationship therebetween. When the attribute of the invited animal and the attribute of the guardian monster have an opposite relationship therebetween, the physical power value of the main character is required to be greater than twice that of the invited animal in order to make the invited animal appear in the game as explained in connection with Fig. 5. In the selective image shown in Fig. 6A, while the physical power value of invited animal Ifrit is 40, the physical power value of the main character is 100 and thus satisfies the condition for making the invited animal appear, whereby the player can make invited animal Ifrit appear in the game.

In Fig. 6B, on the other hand, the invited animal, i.e., robot, has an attribute of thunder, whereas the guardian monster has an attribute of water, whereby the attribute of the invited animal and the attribute of the guardian monster do not have an opposite relationship therebetween. When the attribute of the invited animal and the attribute of the guardian monster do not have an opposite relationship therebetween, the physical power value of the main character is required to be greater than that of the invited animal in order to make the invited animal appear in the game as explained in connection with Fig. 5. In the selective image shown in Fig. 6B, however, the physical power value of the invited animal robot is 150 whereas the physical power value of the main character is 100, whereby the player cannot make the invited animal robot appear in the game.

When invited animal Ifrit is caused to appear in the game as the player operates the controller 15 in Fig. 6A, as shown in Fig. 6C, the part where the image indicative of the rectangular frame is shown in Fig. 6A displays an image illustrating the appearance of invited animal Ifrit, thereby informing the player of the fact that the invited animal has appeared in the game.

Fig. 6C also shows the state where the physical power value of the main character is reduced by 2, i.e., 5% of the physical power value of the invited animal having appeared, so as to become 98.

As indicated by the above-mentioned example, attacking with an invited animal with an attribute having an opposite relationship with that of the guardian monster can yield damages severer than usual, which is advantageous in terms of attacking. In this case, however, it is necessary for the main character to have a physical power value greater than twice that of the invited value in order to make the invited animal appear in the game. Therefore, only invited animals having a relatively low physical power value can be caused to appear in the game. In order for an invited animal with an attribute lacking an opposite relationship with that of the guardian monster to appear, it will be sufficient if the physical power value of the main character is greater than that of the invited animal, whereby invited animals having a relatively high physical power value can be caused to appear in the game. Hence, the player must deliberately choose invited animals to appear in the game in view of attacks from the guardian monster.

Selecting figures and character balls in view of the physical power value of the main character and both the physical power value and attribute of the invited animal as such makes it possible for the player to play the game more advantageously than the other players, which improves strategic elements of the game, whereby the player can become enthusiastic in the game.

When a character ball related to a strong invited animal having a high physical power value is obtained, the main character is required to raise its physical power value in order to make the invited animal appear in the game, whereby the player can become enthusiastic about growing the main character. This can arouse a desire to collect character balls and deepen the attachment to the main character, whereby the player can become more enthusiastic in the game.

Though the above-mentioned example relates to a case where only one invited animal is chosen when the main character stops at a yellow grid, the number of sub characters which can be invited by the inviting device at the same time is not limited in particular, so that two or more characters can be invited simultaneously. Also, the number of sub characters which can be invited may be changed according to the state of proceeding with the game.

Though the above-mentioned example relates to a case where an invited animal is caused to appear when the physical power value, which is a part of capacity values of the main character, exceeds a specific value determined according to the physical power value and attribute which are a part of capacity values of the sub character, the specific value may be determined according to another part (e.g., offensive power value) of capacity values of the sub character or all of the capacity values of the sub character. Also, the invited animal may be caused to appear when another part (e.g., offensive power value) of capacity values of the main character exceeds the specific value.

Preferably, as illustrated in the above-mentioned embodiment, the present invention comprises a capacity value reducing device for reducing a capacity value of the main character when the sub character appears in the game. When the capacity value of the main character is reduced more as the sub character appears with a higher capacity value, a player owning a large number of sub data carriers having high capacity values are not always advantageous. In this case, results better than those of the player owning a large number of sub data carriers having high capacity values can be obtained depending on a selection of sub data carriers employed in the game. Therefore, when equipped with the capacity value reducing device, the gaming machine of the present invention can further improve strategic elements of the game, whereby the player can become more enthusiastic in the game.

After the physical power value of the invited animal is reduced by the capacity value reducing device in the above-mentioned example, a roulette may be displayed in a stopped state, and the physical power value of the main character may be reduced by a predetermined number (e.g., a number corresponding to 2% of the physical power value of the invited animal) each time the main character moves from grid to grid in the field. When the game is played for a long period of time while making a number of strong invited animals appear, the physical value of the main character decreases greatly, whereby the player becomes deliberate about whether to make the invited animal appear or not. As a result, strategic elements of the game can further be improved.

In the present invention, sub data carriers employed in the game are selected according to the capacity value of the main character and the state of proceeding with the game, so as to make sub characters appear in the game, whereby the game can proceed advantageously. Hence, results of the game depend on not only capacity values of characters but also the selection of data carriers by the player, whereby strategic elements of the game can be improved. Sub data carriers can be caused to appear in the game from data carriers newly obtained upon exchange between players as well according to their capacity values, whereby the desire to collect data carriers can be aroused. As a result, the gaming machine can become one which is rich in amusement with a multiplied fun, whereby players can become enthusiastic in the game.

In the present invention, the inviting device used in the game is configured such that, when a capacity value of the main character exceeds a specific value determined according to a capacity value of a sub character read by the sub data reading device, the sub character is caused to appear in the game. Therefore, a sub character cannot appear in the game if the specific value determined by a capacity value of the sub character is higher than the capacity value of the main character. Consequently, players choose data carriers for use in the game more deliberately according to the state of proceeding with the game, so that strategic elements of the game further improve, whereby the players can become more enthusiastic in the game.

Also, a player having obtained a sub data carrier with a high capacity value can get involved in raising (growing) a capacity value of the main character so that the sub character can appear in the game. This can arouse a desire to collect data carriers and deepen the attachment to characters, whereby the player can become more enthusiastic in the game.

In the gaming machine in accordance with the present invention, the inviting device comprises the capacity value reducing device for reducing a capacity value of the main character when the inviting device makes a sub character appear in the game. Therefore, for example, in the case where the physical power value of the main character is reduced every time a sub character appears, and the game is over when the physical power value is zero, whereas the physical power value is reduced more as a capacity value of the sub character to appear is higher, results better than those of the player owning a large number of sub data carriers having high capacity values can be obtained depending on a selection of sub data carriers employed in the game. Since strategic elements of the game can further be improved as such, players can become more enthusiastic in the game.

The gaming machine of the present invention provides a game in which a main character and a sub character dependent on the main character appear. An inviting device determines according to the capacity value of the main character and the capacity value of the sub character whether to make the sub character appear in the game or not during proceeding with the game. The inviting device also makes the sub character appear in the game according to a result of the determination. This machine arouses a desire to collect data carriers and deepens an attachment to characters, thereby multiplying fun by improving strategic elements of the game.

## Claims

1. A gaming machine (12) for providing a game of a main character and a sub character dependent on the main character;
the gaming machine (12) having a main data carrier (30) which stores main data including a capacity value of the main character and a sub data carrier (40) which stores sub data including a capacity value of the sub character;
the gaming machine (12) comprising:
main data reading means (68) for reading the main data from the main data carrier (30);
sub data reading means (70) for reading the sub data from the sub data carrier (40);
game controlling means (50) for proceeding with the game, at least according to the main data read by the main data reading means (68) and a control signal from a controller (15); and
an inviting means (60) for determining according to the capacity value of the main character and the capacity value of the sub character read by the sub data reading means whether to make the sub character appear in the game or not during the game and making the sub character appear in the game according to a result of the determination.

2. A gaming machine (12) according to claim 1, wherein the inviting means (60) makes the sub character appear in the game when the capacity value of the main character exceeds a specific value determined according to the capacity value of the sub character read by the sub data reading means (70).

3. A gaming machine (12) according to claim 1 or 2, further comprising capacity value reducing means (60) for reducing the capacity value of the main character when the inviting means (60) makes the sub character appear in the game.

4. A gaming machine (12) according to one of claims 1 to 3, wherein the main data carrier (30) is an action figure simulating an appearance of the main character.

5. A gaming machine (12) according to one of claims 1 to 4, wherein the sub data carrier (40) is a character ball depicted with an appearance of the sub character.

6. A gaming machine (12) according to one of claims 1 to 5, wherein a transponder of a radio frequency identification (RFID) system is utilized as at least one of the main and sub data carriers (30, 40).

7. A plurality of the gaming machines (12) is arranged in parallel, wherein at least one of the gaming machines comprises:
main data reading means (68) for reading the main data from the main data carrier (30);
sub data reading means (70) for reading the sub data from the sub data carrier (40);
game controlling means (50) for proceeding with the game, at least according to the main data read by the main data reading means (68) and a control signal from a controller (15); and
an inviting means (60) for determining according to the capacity value of the main character and the capacity value of the sub character read by the sub data reading means whether to make the sub character appear in the game or not during the game and making the sub character appear in the game according to a result of the determination.

8. A gaming machine (12) according to one of claims 1 to 7, further comprising display means for displaying at least one of an image related to the game and a state of proceeding with the gaming machine.

9. A gaming machine (12) according to claim 8, wherein a representation image concerning the sub character is displayed on the display means according to emergence of the sub character in the game caused by the inviting means.

10. A gaming machine (12) according to one of claims 1 to 9, further comprising a data carrier table (20) for mounting the main and sub data carriers (30, 40).

11. A gaming machine (12) according to one of claims 1 to 10, further comprising a reader/writer (68) which reads the main data stored in the main data carrier (30) and writes the main data into the main data carrier (30).

12. A gaming machine (12) according to one of claims 1 to 11, further comprising a reader/writer (70) which reads the sub data stored in the sub data carrier (40) and writes the sub data into the sub data carrier (40).

13. A gaming machine (12) according to one of claims 1 to 12, wherein the capacity values of the main and sub characters comprise at least one of physical, offensive, and magical power values.

14. A gaming machine (12) for providing a game of a main character and a sub character dependent on the main character;
the gaming machine (12) having a main data carrier (30) which stores main data including a capacity value of the main character and a sub data carrier (40) which stores sub data including a capacity value of the sub character;
the gaming machine (12) comprising:
a main data reading device (68) which reads the main data from the main data carrier (30);
a sub data reading device (70) which reads the sub data from the sub data carrier (40);
a game controlling device (50) which proceeds with the game, at least according to the main data read by the main data reading device (68) and a control signal from a controller (15); and
an inviting device (60) which determines according to the capacity value of the main character and the capacity value of the sub character read by the sub data reading device whether to make the sub character appear in the game or not during the game and making the sub character appear in the game according to a result of the determination.
